(19) Europäisches Patentamt
European Patent Office
Office européen des brevets

(11) **EP 4 281 784 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **22700797.8**

(22) Anmeldetag: **17.01.2022**

(51) Internationale Patentklassifikation (IPC):
**B62M 6/45** (2010.01)    **B62M 6/50** (2010.01)
**B62M 6/55** (2010.01)    **G01P 21/02** (2006.01)
**G01P 7/00** (2006.01)    **G01P 3/487** (2006.01)
**B60W 40/105** (2012.01)    **B62J 45/412** (2020.01)
**G01P 3/50** (2006.01)

(52) Gemeinsame Patentklassifikation (CPC):
**G01P 3/50; B60W 40/105; B62J 45/412;**
**B62M 6/45; B62M 6/50; B62M 6/55; G01P 3/487;**
**G01P 7/00; G01P 21/02;** B60W 2300/36

(86) Internationale Anmeldenummer:
**PCT/EP2022/050859**

(87) Internationale Veröffentlichungsnummer:
**WO 2022/157108 (28.07.2022 Gazette 2022/30)**

(54) **VERFAHREN UND VORRICHTUNG ZUM ERMITTELN EINER GESCHWINDIGKEIT EINES FAHRRADS**

METHOD AND DEVICE FOR ASCERTAINING THE SPEED OF A PEDAL CYCLE

PROCÉDÉ ET DISPOSITIF POUR DÉTERMINER LA VITESSE D'UN CYCLE À PÉDALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **21.01.2021  DE 102021200516**

(43) Veröffentlichungstag der Anmeldung:
**29.11.2023  Patentblatt 2023/48**

(73) Patentinhaber: **Robert Bosch GmbH**
**70442 Stuttgart (DE)**

(72) Erfinder:
• **BAUMGAERTNER, Daniel**
**72072 Tuebingen (DE)**
• **RECK, Joseph**
**70794 Filderstadt (DE)**

(56) Entgegenhaltungen:
**EP-A2- 3 435 094**        **DE-A1- 102005 005 048**
**DE-A1- 102006 040 297**   **DE-A1- 102014 212 760**
**US-A1- 2015 220 848**

**Beschreibung**

Technisches Gebiet

Die vorliegende Erfindung betrifft ein Verfahren zum Ermitteln einer Geschwindigkeit eines Fahrrads.
Die vorliegende Erfindung betrifft weiter eine Vorrichtung zum Ermitteln einer Geschwindigkeit eines Fahrrads

Stand der Technik

Obwohl allgemein auf beliebige Fahrräder anwendbar, wird die vorliegende Erfindung in Bezug auf Fahrräder in Form von Pedelecs beschrieben.
Es ist bei Pedelecs bekannt geworden, zur Geschwindigkeitsmessung einen pulsbasierten Sensor, kurz Pulssensor, am Hinterrad einzusetzen. Dieser liefert einen Puls pro Radumdrehung auf dessen Basis mittels des Radumfangs eine Geschwindigkeit berechnet werden kann. Dieses Signal wird in bisher bekannter Weise unter anderem dazu eingesetzt, die Fahrer-Unterstützung ab einer gewissen Geschwindigkeit abzuregeln, um so beispielsweise gesetzliche Vorgaben zu erfüllen. Um auch bei einem defekten Sensor eine Fahrer-Unterstützung anbieten zu können, muss dann auf ein anderes Geschwindigkeitssignal zurückgegriffen werden. Dieser Zustand wird in bekannter Weise als Limp Mode bezeichnet. In diesem Limp Mode wird ein Ersatzgeschwindigkeitssignal basierend auf der Motordrehzahl verwendet und mittels der maximalen Gangübersetzung nach oben abgeschätzt. Fährt der Fahrer im höchsten Gang, ist eine Fahrer-Unterstützung bis zur gesetzlichen Grenze möglich. Bei niedrigeren Gängen kommt es zu einer entsprechend früheren Abregelung und somit zu Komforteinbußen. Eine direkte Rückkopplung zwischen der Unterstützung und der Motordrehzahl kann zu weiteren Komforteinbußen an der Abregelungsgrenze durch ein stotterndes Verhalten des Motors führen. Um einen defekten Pulssensor zu erkennen, ist es weiter bekannt geworden, die Pulse gegen die Motordrehzahl zu plausibilisieren oder auch die Zeit bis zum nächsten erwarteten Puls zu überwachen. Ferner wird auf die Druckschriften DE 10 2005 005048 A1, US 2015/220848 A1, DE 10 2014 212760 A1, EP 3 435 094 und DE 10 2006 040297 A1 verwiesen.

Offenbarung der Erfindung

In einer Ausführungsform stellt die vorliegende Erfindung ein Verfahren zum Ermitteln einer Geschwindigkeit eines Fahrrads bereit, insbesondere eines Zwei- oder Dreirads in Form eines Pedelecs, wobei die Geschwindigkeit des Fahrrads basierend auf einem pulsbasierten Primärsignal, bereitgestellt mittels einer Primärsignaleinrichtung, ermittelt wird, wobei das Primärsignal das Signal der Primärsignaleinrichtung ist, welches primär zur Ermittlung der Geschwindigkeit des Fahrrads herangezogen wird und wobei im Fall einer Störung des Primärsignals die folgenden Schritte durchgeführt werden:

- Bereitstellen zumindest zweier Ersatzsignale für die Geschwindigkeit des Fahrrads,
- Berechnen eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads wiedergibt, und
- Ermitteln der Geschwindigkeit des Fahrrads in einem Überbrückungsbetrieb basierend auf demjenigen Ersatzsignal mit dem höheren Vertrauensparameter.

In einer weiteren Ausführungsform stellt die vorliegende Erfindung eine Vorrichtung zum Ermitteln einer Geschwindigkeit eines Fahrrads, insbesondere eines Zwei- oder Dreirads in Form eines Pedelecs bereit, umfassend

eine Primärsignaleinrichtung, die ausgebildet ist, ein pulsbasiertes Primärsignal zur Ermittlung der Geschwindigkeit des Fahrrads bereitzustellen, zumindest eine Ersatzsignaleinrichtung, die ausgebildet ist, zumindest zwei Ersatzsignale für die Geschwindigkeit des Fahrrads bereitzustellen, und eine Geschwindigkeitsermittlungseinrichtung, die ausgebildet ist, anhand des Primarsignals und der Ersatzsignale die Geschwindigkeit des Fahrrads zu ermitteln und im Fall einer Störung des Primärsignals die folgenden Schritte durchzuführen:

- Berechnen eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads wiedergibt, sowie
- Ermitteln der Geschwindigkeit des Fahrrads in einem Überbrückungsbetrieb basierend auf demjenigen Ersatzsignal mit dem höheren Vertrauensparameter.

In einer weiteren Ausführungsform stellt die vorliegende Erfindung ein Fahrrad, insbesondere ein Zwei- oder Dreirad, vorzugsweise in Form eines Pedelecs, mit einer Vorrichtung gemäß Anspruch 11 bereit.
Einer der damit erzielten Vorteile ist, dass temporäre Störungen im Primärsignal keine oder zumindest wenig Auswirkungen auf das Fahrgefühl des Fahrers des Fahrrads hervorrufen. Derartige Störungen können beispielsweise beim Einsatz von Felgenmagneten und bei Bereitstellung von Primärsignalen mittels Magnetfeldsensoren beim Überfahren von Brücken, die magnetisierte Bauelemente enthalten, auftreten oder auch beim Fahren in der Nähe von Bahnstrecken, die Störungen auf Grund des Bahnstromnetzes hervorrufen können. Ein weiterer damit erzielter Vorteil ist die größere Toleranz beim Einbau, beispielsweise beim Einbau von Felgenmagneten und den Magnetfeldsensoren, hinsichtlich ihrer Position. Darüber hinaus ist ein weiterer Vorteil, dass die Zuverlässigkeit der Geschwindigkeitsermittlung des Fahrrads insgesamt verbessert wird.

Weitere Merkmale, Vorteile und weitere Ausführungsformen der Erfindung sind im Folgenden beschrieben oder werden dadurch offenbar.

Gemäß einer Weiterbildung der Erfindung wird dasjenige Ersatzsignal zum Ermitteln der Geschwindigkeit ausgewählt basierend auf einer vorab hinterlegten Rangfolge, wenn für zumindest zwei der Ersatzsignale mit dem höchsten Vertrauensparameter jeweils der gleiche Vertrauensparameter ermittelt wird. Damit wird auf einfache Weise eine Reihenfolge festgelegt, wenn Vertrauensparameter unterschiedlicher Ersatzsignale gleich sind.

Gemäß einer weiteren Weiterbildung der Erfindung wird regelmäßig und/oder auf Anforderung überprüft, ob die Störung des Primärsignals weggefallen ist, wobei bei festgestelltem Wegfall der Störung die Geschwindigkeit des Fahrrads wieder anhand des Primärsignals ermittelt wird. Einer der damit möglichen Vorteile ist, dass das Ersatzsignal nur bei Störung verwendet wird und bei Wegfall der Störung, der Wegfall schnell detektiert wird und die Berechnung der Geschwindigkeit wieder basierend auf dem Primärsignal erfolgen kann, sodass Funktionen des Fahrrads, die auf der Geschwindigkeit basieren wieder mit hoher Zuverlässigkeit und Fahrerkomfort bereitgestellt werden können.

Gemäß einer weiteren Weiterbildung der Erfindung wird der Wegfall der Störung des Primärsignals detektiert, wenn die ermittelten Geschwindigkeiten basierend auf dem Primärsignal und basierend auf dem ausgewählten Ersatzsignal innerhalb einer vorgegebenen Toleranz gleich sind, insbesondere für eine vorgebbare zurückgelegte Strecke mittels des Fahrrads und/oder für eine vorgebbare Zeitspanne. Damit wird ein zuverlässiges Detektieren des Wegfalls der Störung des Primärsignals ermöglicht.

Gemäß einer weiteren Weiterbildung der Erfindung wird eine Störung des Primärsignals detektiert, wenn zumindest ein erwarteter Puls ausbleibt. Damit kann auf besonders einfache Weise eine Störung des Primärsignals ermittelt werden.

Gemäß einer weiteren Weiterbildung der Erfindung wird die Geschwindigkeit des Fahrrads nach oben abgeschätzt, wenn die Werte der zumindest zwei berechneten Vertrauensparameter unterhalb eines vorgegebenen Grenzwerts liegen. Damit wird sichergestellt, dass auch bei unzuverlässigem Ersatzsignal eine Geschwindigkeit ermittelt werden kann, die vorgegebenen Bedingungen genügt.

Gemäß einer weiteren Weiterbildung der Erfindung wird der Wegfall der Störung nicht mehr überprüft, wenn die Werte der zumindest zwei berechneten Vertrauensparameter mindestens einmal unterhalb eines vorgegebenen Grenzwerts liegen. Einer der damit erzielten Vorteile ist die erhöhte Zuverlässigkeit, da dann die Geschwindigkeit, beispielsweise bis zu einem Neustart des gesamten Systems, immer nach oben abgeschätzt wird, weil auch das Ersatzsignal nicht die erforderliche Zuverlässigkeit für die Ermittlung der Geschwindigkeit ermöglicht.

Gemäß einer weiteren Weiterbildung der Erfindung wird das Primärsignal anhand eines Reedkontakts und/oder eines Magnetfeldsensors und entsprechendem Magnet an einem Rad des Fahrrads bereitgestellt und/oder es wird zumindest ein Ersatzsignal mittels einer Inertialmesseinheit, eines Fahrerkadenzsensors, eines Fahrerdrehmomentsensors, eines Antriebskadenzsensors und/oder eines Antriebsmomentsensors eines Antriebs des Fahrrads bereitgestellt. Vorteil hiervon ist eine hohe Flexibilität bei der Auswahl an Sensoren zur Bereitstellung der Signale zur Ermittlung der Geschwindigkeit.

Gemäß einer weiteren Weiterbildung der Erfindung wird ein Übersetzungsverhältnis eines Getriebes des Antriebs zusätzlich bei der Ermittlung der Geschwindigkeit anhand des Ersatzsignals berücksichtigt. Vorteil hiervon ist eine verbesserte Genauigkeit bei der Ermittlung der Geschwindigkeit mittels des Ersatzsignals.

Gemäß einer weiteren Weiterbildung wird die Primärsignaleinrichtung, insbesondere auf Anforderung, abgeschaltet, solange der berechnete Vertrauensparameter des ausgewählten Ersatzsignals oberhalb eines vorgegebenen Grenzwerts liegt. Einer der damit erzielten Vorteile ist, dass Energie gespart werden kann, solange die Primärsignaleinrichtung abgeschaltet bleibt.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Kurze Beschreibung der Zeichnungen

Fig. 1    Schritte eines Verfahrens gemäß einer Ausführungsform der vorliegenden Erfindung;

Fig. 2    eine Vorrichtung gemäß einer Ausführungsform der vorliegenden Erfindung;

Fig. 3    ein Pedelec gemäß einer Ausführungsform der vorliegenden Erfindung; und

Fig. 4    ein Verfahren zum Betreiben eines Fahrrads gemäß einer Ausführungsform der vorliegenden Erfindung

Ausführungsformen der Erfindung

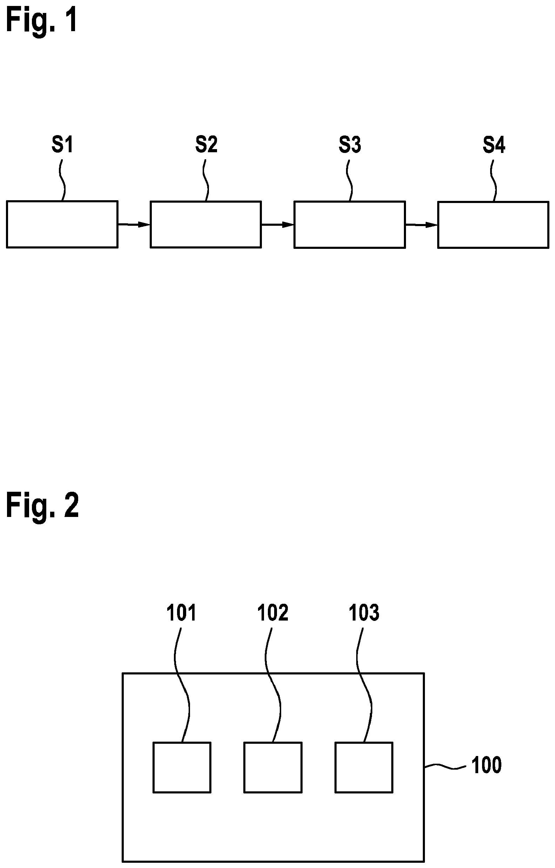

Figur 1 zeigt Schritte eines Verfahrens gemäß einer Ausführungsform der vorliegenden Erfindung.

Im Detail zeigt Figur 1 in schematischer Form Schritte eines Verfahrens zum Ermitteln einer Geschwindigkeit eines Fahrrads, insbesondere eines Zwei- oder Dreirads in Form eines Pedelecs. Die Geschwindigkeit des Fahrrads wird dabei in einem ersten Schritt S1 basierend auf einem Primärsignal, bereitgestellt mittels einer Primärsignaleinrichtung, ermittelt. Im Falle einer Störung des Primärsignals werden die folgenden Schritte durchgeführt:

- Bereitstellen S2 zumindest zweier Ersatzsignale für die Geschwindigkeit des Fahrrads,
- Berechnen S3 eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads wiedergibt, und
- Ermitteln S4 der Geschwindigkeit des Fahrrads basierend auf demjenigen Ersatzsignal mit dem höheren Vertrauensparameter.

Figur 2 zeigt eine Vorrichtung gemäß einer Ausführungsform der vorliegenden Erfindung.

Im Detail zeigt Figur 2 in schematischer Form eine Vorrichtung 100 zum Ermitteln einer Geschwindigkeit eines Fahrrads, insbesondere eines Zwei- oder Dreirads in Form eines Pedelecs. Die Vorrichtung 100 umfasst

eine Primärsignaleinrichtung 101, die ausgebildet ist, ein Primärsignal zur Ermittlung der Geschwindigkeit des Fahrrads bereitzustellen,
zumindest eine Ersatzsignaleinrichtung 102, die ausgebildet ist, zumindest zwei Ersatzsignale für die Geschwindigkeit des Fahrrads bereitzustellen, und eine Geschwindigkeitsermittlungseinrichtung 103, die ausgebildet ist, anhand des Primarsignals und der Ersatzsignale die Geschwindigkeit des Fahrrads zu ermitteln und im Fall einer Störung des Primärsignals die folgenden Schritte durchzuführen:

- Berechnen eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads wiedergibt, sowie
- Ermitteln der Geschwindigkeit des Fahrrads basierend auf demjenigen Ersatzsignal mit dem höheren Vertrauensparameter.

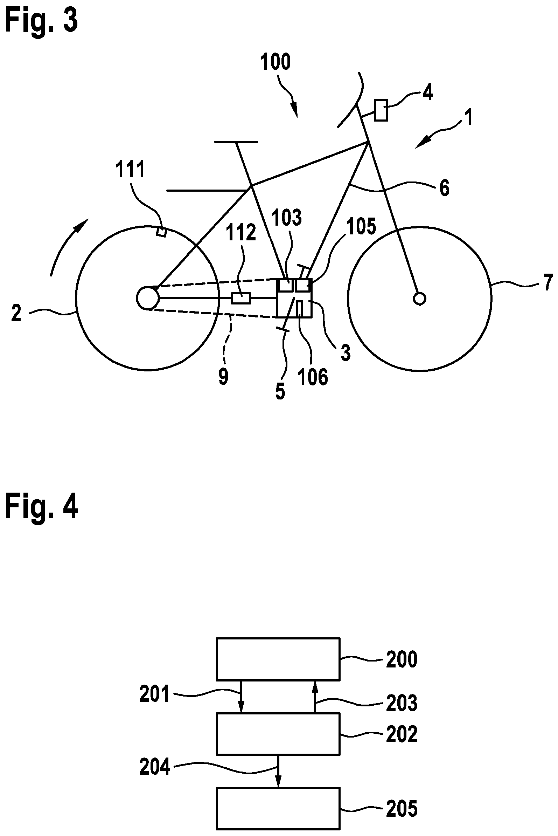

Figur 3 zeigt in schematischer Form ein Pedelec gemäß einer Ausführungsform der vorliegenden Erfindung und Figur 4 ein Verfahren zum Betreiben eines Pedelecs gemäß einer Ausführungsform der vorliegenden Erfindung.

Im Detail zeigt Figur 3 ein Pedelec 1 mit einem Hinterrad 2 und einem Vorderrad 7. Mittels einer Antriebseinheit 3, die am Rahmen 6 des Fahrrads 1 angeordnet ist und sowohl eine Motorunterstützung mittels eines Motors bereitstellen kann als auch eine Pedaleinheit mit Pedalen 5 zum manuellen Antrieb beinhaltet, kann das Hinterrad 2 über eine Kette 9 angetrieben werden. In dem Hinterrad 2 ist eine Ausgangsfelderzeugungseinheit 111 in Form eines Permanentmagneten angeordnet. Weiterhin ist im Bereich zwischen Antriebseinheit 3 und Hinterrad 2 am Rahmen 6 eine Detektionseinrichtung 112 in Form zumindest eines Sensors angeordnet. Der Sensor kann dabei das durch die Drehung des Hinterrads 2 durch den Permanentmagneten sich am Ort des Sensors verändernde magnetische Feld zumindest eindimensional, vorzugsweise zwei- oder dreidimensional messen. Alternativ kann hierzu ebenfalls ein Reed-Kontakt verwendet werden, der durch das Vorbeibewegen der Permanentmagneten nur öffnet und schließt. Ausgangsfelderzeugungseinheit 111 und Detektionseinrichtung 112 bilden somit eine Primärsignaleinrichtung.

Weiterhin umfasst das Fahrrad 1 eine Geschwindigkeitsermittlungseinrichtung 103, die zum Ermitteln der Geschwindigkeit des Fahrrads ausgebildet ist. Hierzu ist diese mit der Detektionseinrichtung 112 verbunden und ermittelt aus den von der Detektionseinrichtung 112 erhaltenen Signalen des detektierten Magnetfelds oder Reedkontaktes die entsprechende Geschwindigkeit des Fahrrads 1. Zur Anzeige von Funktionen des Pedelecs ist weiter eine Anzeigeeinrichtung 4 am Lenker des Pedelecs 1 angeordnet.

Die Antriebseinheit 3 umfasst beziehungsweise mit ihr verbunden sind hierbei eine Mehrzahl unterschiedlicher Sensoren:
Als Sensor für das Primärgeschwindigkeitssignal ist - wie vorstehend allgemein beschrieben - ein Reedkontakt oder Magnetfeldsensor (Bezugszeichen 112) mit entsprechendem Felgenmagnet (Bezugszeichen 111) angeordnet. Der Sensor stellt ein pulsbasiertes Geschwindigkeitssignal $v_{Primär}$ bereit. Weiter ist an einer geeigneten Position am Rahmen 6 oder in der Antriebseinheit 3 eine Inertialmesseinheit 105 angeordnet, die einen 3D-Beschleunigungssensor und ein 3D-Gyroskop aufweist. Darüber hinaus sind weitere Sensoren (schematisch dargestellt mit Bezugszeichen 106) in der Antriebseinheit 3 angeordnet:

- Fahrerkadenzsensor
- Fahrerdrehmomentsensor
- Motorkadenzsensor

- Motormomentsensorik

Mittels der oben beschriebenen Sensoren (Bezugszeichen 112, 105, 106) können zumindest drei unterschiedliche Geschwindigkeitssignale bereitgestellt werden, aus denen sich wiederum eine Geschwindigkeit des Fahrrads 1, insbesondere in Form des Pedelecs berechnet lässt:

> 1. Inertialsensorikbasierte Geschwindigkeit $v_{imu}$: Mithilfe eines kinematischen Fahrradmodels und eines Sensorfusionsalgorithmuses wird eine modellbasierte Geschwindigkeit berechnet. Als Startwert wird insbesondere die letzte valide Geschwindigkeit des primären Geschwindigkeitssignals gewählt. Zusätzlich zur Geschwindigkeit kann der Sensorfusionsalgorithmus noch den Rollwinkel $\varphi$ und den Nickwinkel $\vartheta$ des Pedelecs berechnen.
> 2. Fahrerkadenz-basierte Geschwindigkeit $v_{drv}$: Auf Basis der Fahrerkadenz und des aktuellen Gangverhältnisses kann die Fahrradgeschwindigkeit bestimmt werden.
> 3. Motorkadenz-basierte Geschwindigkeit $v_{mot}$: Auf Basis der Motordrehzahl und des aktuellen Gangverhältnisses kann die Fahrradgeschwindigkeit bestimmt werden.

Für 2. und 3. wird insbesondere das aktuelle Gangverhältnis herangezogen. Dieses wird im Falle eines noch als funktionierend angesehenen primären Geschwindigkeitssensors (Bezugszeichen 111, 112) aus dem Verhältnis der primären Geschwindigkeit und der Fahrer- beziehungsweise Motorkadenz berechnet. Dazu muss gewährleistet sein, dass Fahrer beziehungsweise Motor im Eingriff sind, das heißt synchron zum Hinterrad 2 laufen. Dies kann über das Fahrer- beziehungsweise Motormoment bestimmt werden.

Der Vertrauensparameter - im Folgenden auch als Vertrauenskennziffer $\delta$ bezeichnet - beschreibt die Güte eines Geschwindigkeitssignals. So kann bei einem Wert von 1 dem jeweiligen Signal vertraut werden. Bei fallendem Wert kann dem jeweiligen Geschwindigkeitssignal immer weniger vertraut werden, bis das jeweilige Geschwindigkeitssignal bei einem Wert von 0 keine Validität mehr aufweist.

Für $v_{drv}$ und $v_{mot}$ kann die Kennziffer beispielsweise mit einfachen binären Bedingungen beschrieben werden. Dem Geschwindigkeitssignal kann voll vertraut werden ($\delta$ = 1), insbesondere genau dann wenn

- Motor beziehungsweise Fahrer im Eingriff sind und
- das Gangverhältnis bekannt ist.

Ist eine dieser Bedingungen nicht erfüllt, ist $\delta$ = 0 und es wird ein anderes Ersatzgeschwindigkeitssignal gewählt. Dies ist insbesondere der Fall, wenn Motor beziehungsweise Fahrer nicht mehr im Eingriff sind (Motor- beziehungsweise Fahrermoment fällt unter einen vorgebbaren Schwellwert) oder ein Schaltvorgang erkannt wird (Gangverhältnis ist nicht mehr bekannt).

Für die auf dem Inertialsensorik-Geschwindigkeitssignal basierte Geschwindigkeit $v_{imu}$ erfolgt eine Berechnung mittels eines modellbasierten Sensorfusionsalgorithmus, welcher die jeweilige Geschwindigkeit insbesondere lediglich in einer gewissen Güte berechnen kann. Dies liegt beispielsweise an Abweichungen des Modells von der Realität und/oder an ungenauen Sensorwerten oder Rauschen im Sensor.

Liegt zum Beispiel ein Grundrauschen im Beschleunigungssensor vor, driftet die mittels Integration berechnete Geschwindigkeit weg. Je länger dies erfolgt, desto weniger kann der berechneten Geschwindigkeit vertraut werden und der Vertrauensparameter sinkt. Ebenso gilt: Je ungenauer das zugrundeliegende Modell ist, desto schneller differieren reale und berechnete Geschwindigkeit. Für einfache, nichtdynamische Fahrszenarien ist die zugrundeliegende Modellierung oft ausreichend und es werden gute Ergebnisse in der Geschwindigkeitsschätzung erreicht. Bei dynamischen Fahrmanövern, wie zum Beispiel bei

- starkem Abbremsen/Beschleunigen, unter Umständen einhergehend mit starkem Einfedern des Fahrrads, Abheben des Vorder- oder Rückrads, oder
- Kurvenfahren mit starkem Rollwinkel und hoher Querdynamik

kommt es zu Ungenauigkeiten im bereitgestellten Geschwindigkeitssignal und damit bei der berechneten Geschwindigkeit. Die Güte ist ebenso vom gewählten Algorithmus abhängig. Je dynamischer die Fahrmanöver sind, desto schlechter wird das Geschwindigkeitssignal und die daraus berechnete Geschwindigkeit. Die Dynamik des Fahrmanövers wird somit über die Sensorsignale der Inertialmesseinheit 105 und den daraus abgeleiteten Größen bestimmt. Starke Kurvenfahrten weisen beispielsweise eine hohe Querbeschleunigung und Gierrate auf. Ein großer Rollwinkel ist ein Indikator für die Dynamik des Fahrmanövers. Ein starkes Beschleunigen oder Bremsen kann dabei aus den Werten des Beschleunigungssensors der Inertialmesseinheit 105 ermittelt werden.

Wie stark die Vertrauenskennziffer $\delta = \delta(k(t))$ über die Zeit abnimmt ist wird durch eine über die Zeit zu integrierende Größe - hier $k(t)$ genannt - bestimmt und setzt sich beispielsweise aus einem konstanten Anteil $k_0$ und weiteren manöverabhängigen Anteilen zusammen (abhängig beispielsweise von den Sensorwerten der Inertialmesseinheit, also Beschleunigungsdaten $a(t)$ und Drehraten $\omega(t)$. Im Folgenden werden dazu beispielhaft 2 Manöver gewählt:

> 1. Abbremsen/Beschleunigen: Genutztes Sensorsignal ist hier die Beschleunigung in Fahrtrichtung $a_x(t)$. Daraus berechnet wird der Anteil $k_1(t)$.
> 2. Kurvenfahrt: Genutztes Sensorsignal ist hier die Drehrate um den Gierwinkel $\omega_\psi(t)$. Daraus berechnet wird der Anteil $k_2(t)$.

Damit setzt sich k zusammen aus:

$$k(t) = k_0 + k_1(a_x(t)) + k_2(\omega_\psi(t))$$

Daneben sind auch alternativ oder zusätzlich unter anderem die folgenden Verfahren zur Bestimmung von $k(t)$ möglich: Algorithmen mit inhärenter Berechnung der Güte der geschätzten Zustände, beispielsweise Kovarianzmatrix bei einem Kalman-Filter, Methoden der künstlichen Intelligenz und/oder Fuzzy-Logik oder dergleichen.

Wird ein fehlender Puls im Primärsignal detektiert, wechselt die Vorrichtung 100 auf das jeweilige Ersatzgeschwindigkeitssignal mit der höchsten Vertrauenskennzahl $\delta$. Haben die Vertrauenskennzahlen aller entsprechend berechneten Ersatzgeschwindigkeiten den gleichen Wert, wird beispielsweise folgende Priorisierung gewählt:

1.    $v_{mot}$

2.    $v_{drv}$

3.    $v_{imu}$

Solange die Vertrauenskennzahl einem vorgegebenen Grenzwert $0 < \delta_{grenz} < 1$ überschreitet, erfolgt kein Wechsel in den sogenannten Limp Mode, bei dem das Ersatzgeschwindigkeitssignal $v_{limp}$ auf der Motordrehzahl basiert und mittels der maximalen Gangübersetzung nach oben abgeschätzt wird. Fährt der Fahrer im höchsten Gang, so ist eine Unterstützung im Limp Mode bis zur gesetzlichen Grenze möglich. Bei niedrigeren Gängen kommt es zu einer entsprechend früheren Abregelung und somit zu unerwünschten Komforteinbußen. Solange also die Vertrauenskennzahl über dem genannten Grenzwert liegt, ist eine "Heilung" des primären Geschwindigkeitssignals möglich, das heißt es kann wieder zurück auf das primäre Geschwindigkeitssignal zur Ermittlung der Geschwindigkeit gewechselt werden. Der Geschwindigkeitssensor für das primäre Geschwindigkeitssignal wird dann wieder als funktional deklariert, wenn er wieder Pulse bereitstellt, die zum Geschwindigkeitssignal des Ersatzgeschwindigkeitssignals korrespondieren. Für die "Heilung" wird aus der Ersatzgeschwindigkeit v(t) die zurückgelegte Strecke zwischen den wieder erkannten Pulsen zu zwei Zeiten $t_1$ und $t_2$ berechnet:

$$s(t) = \int_{t_1}^{t_2} v(t)dt$$

Liegt dieser Wert in einem gewissen Bereich $\Delta s$, um die zu erwartende Strecke zwischen zwei Pulsen, dem

Randumfang U

$$U - \Delta s < s(t) < U + \Delta s,$$

dann korrespondieren die Pulse wieder zur Fahrradgeschwindigkeit und die Geschwindigkeit wird wieder auf Basis des Primärgeschwindigkeitssignals ermittelt. Der Bereich wird dabei abhängig von der Vertrauenskennzahl gewählt $\Delta s(\delta)$, um eine gewisse Toleranz zu erreichen. Je größer die Vertrauenskennzahl für das aktuelle Ersatzgeschwindigkeitssignal ist, desto geringer muss die Toleranz gewählt sein. Dies darf nur bis zu einem Grenzwert erfolgen. Fällt die Vertrauenskennzahl unter den vorgegebenen Grenzwert $\delta < \delta_{grenz}$, wechselt die Vorrichtung 100 in den Limp Mode und ein Fehler wird auf der Anzeigeeinrichtung 4 angezeigt. Eine Rückkehr in den normalen Fahrbetrieb ist nicht mehr ohne Neustart des Betriebssystems des Fahrrads 1 möglich.

Erfolgt wieder eine Bereitstellung einer Mehrzahl von Pulsen während des Durchfahrens der aus den Ersatzgeschwindigkeit berechneten Strecken, dann kann der primäre Geschwindigkeitssensor (Bezugszeichen 111, 112) wieder als funktional angesehen werden. Es wird wieder auf die primäre pulsbasierte Geschwindigkeit gewechselt. Die oben beschriebenen Schritte sind hierbei als Ablaufdiagramm in Figur 4 wiedergegeben. Es erfolgt zunächst also eine Geschwindigkeitsermittlung des Fahrrads mittels des primären Geschwindigkeitssensors (Bezugszeichen 111, 112), der sogenannte nominelle Betrieb (Bezugszeichen 200). Wird eine Störung des primären Geschwindigkeitssensors (Bezugszeichen 111, 112) beziehungsweise dessen Signals, festgestellt (Schritt 201) erfolgt ein Überbrückungsbetrieb (Schritt 202) zur Geschwindigkeitsermittlung auf Basis eines Ersatzgeschwindigkeitssignals zur Ermittlung der Geschwindigkeit des Fahrrads. Es wird laufend beziehungsweise regelmäßig überprüft, ob dieses Ersatzgeschwindigkeitssignal vertrauenswürdig ist. Ist dieses nicht vertrauenswürdig (Schritt 204), liegt also der Vertrauensparameter des Ersatzgeschwindigkeitssignals beziehungsweise der Ersatzgeschwindigkeit unterhalb eines vorgegebenen Grenzwertes, wird das Fahrrad in dem genannten Limp Mode betrieben (Schritt 205). Ein Wechsel in den Überbrückungsbetrieb (Bezugszeichen 202) oder in den nominellen Betrieb (Bezugszeichen 200) erfolgt nicht mehr beziehungsweise kann nur durch einen Neustart des Betriebssystems des Fahrrads, insbesondere der Vorrichtung zur Ermittlung der Geschwindigkeit, erfolgen. Wird im Überbrückungsbetrieb (Bezugszeichen 202) der primäre Geschwindigkeitssensor (Bezugszeichen 111, 112) wieder als funktional erkannt (Schritt 203), erfolgt der Wechsel zurück in den nominellen Betrieb (Bezugszeichen 200).

Zusammenfassend weist zumindest eine der Ausführungsformen der Erfindung zumindest einen der folgenden Vorteile auf:

-    Erhöhte Zuverlässigkeit.

- Höherer Fahrerkomfort.
- Höhere Genauigkeit bei der Ermittlung der Geschwindigkeit.
- Einfachere Implementierung.
- Höhere Toleranz bei der Anordnung von Sensoren.

Obwohl die vorliegende Erfindung anhand bevorzugter Ausführungsbeispiele beschrieben wurde, ist sie nicht darauf beschränkt, sondern auf vielfältige Weise modifizierbar.

**Patentansprüche**

1. Verfahren zum Ermitteln einer Geschwindigkeit eines Fahrrads (1), insbesondere eines Zwei- oder Dreirads in Form eines Pedelecs, wobei die Geschwindigkeit des Fahrrads (1) basierend auf einem pulsbasierten Primärsignal, bereitgestellt mittels einer Primärsignaleinrichtung (101), ermittelt (S1) wird, wobei das Primärsignal das Signal der Primärsignaleinrichtung ist, welches primär zur Ermittlung der Geschwindigkeit des Fahrrads herangezogen wird und wobei im Fall einer Störung des Primärsignals die folgenden Schritte durchgeführt werden:

   - Bereitstellen (S2) zumindest zweier Ersatzsignale für die Geschwindigkeit des Fahrrads (1),
   - Berechnen (S3) eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads (1) wiedergibt,
   - Ermitteln (S4) der Geschwindigkeit des Fahrrads (1) in einem Überbrückungsbetrieb basierend auf demjenigen Ersatzsignal mit dem höheren Vertrauensparameter.

2. Verfahren gemäß Anspruch 1, wobei dasjenige Ersatzsignal zum Ermitteln der Geschwindigkeit ausgewählt wird basierend auf einer vorab hinterlegten Rangfolge, wenn für zumindest zwei der Ersatzsignale mit dem höchsten Vertrauensparameter jeweils der gleiche Vertrauensparameter ermittelt wird.

3. Verfahren gemäß einem der Ansprüche 1-2, wobei regelmäßig und/oder auf Anforderung überprüft wird, ob die Störung des Primärsignals weggefallen ist und wobei bei festgestelltem Wegfall der Störung die Geschwindigkeit des Fahrrads wieder anhand des Primärsignals ermittelt wird.

4. Verfahren gemäß Anspruch 3, wobei der Wegfall der Störung des Primärsignals detektiert wird, wenn die ermittelten Geschwindigkeiten basierend auf dem Primärsignal und basierend auf dem ausgewählten Ersatzsignal innerhalb einer vorgegebenen Toleranz gleich sind, insbesondere für eine vorgebbare zurückgelegte Strecke mittels des Fahrrads (1) und/oder für eine vorgebbare Zeitspanne.

5. Verfahren gemäß einem der Ansprüche 1-4, wobei eine Störung des Primärsignals detektiert wird, wenn zumindest ein erwarteter Puls ausbleibt.

6. Verfahren gemäß einem der Ansprüche 1-5, wobei die Geschwindigkeit des Fahrrads (1) nach oben abgeschätzt wird, wenn die Werte der zumindest zwei berechneten Vertrauensparameter unterhalb eines vorgegebenen Grenzwerts liegen.

7. Verfahren gemäß einem der Anspruch 6, wobei der Wegfall der Störung nicht mehr überprüft wird, wenn die Werte der zumindest zwei berechneten Vertrauensparameter mindestens einmal unterhalb eines vorgegebenen Grenzwerts liegen.

8. Verfahren gemäß einem der Ansprüche 1-7, wobei das Primärsignal anhand eines Reedkontakts und/oder eines Magnetfeldsensors (102) und entsprechendem Magnet (101) an einem Rad (2, 7) des Fahrrads (1) bereitgestellt wird und/oder wobei zumindest ein Ersatzsignal mittels einer Inertialmesseinheit (105), eines Fahrerkadenzsensors, eines Fahrerdrehmomentsensors, eines Antriebskadenzsensors und/oder eines Antriebsmomentsensors eines Antriebs des Fahrrads bereitgestellt wird.

9. Verfahren gemäß Anspruch 8, wobei ein Übersetzungsverhältnis eines Getriebes des Antriebs zusätzlich bei der Ermittlung der Geschwindigkeit anhand des Ersatzsignals berücksichtigt wird.

10. Verfahren gemäß einem der Ansprüche 1-9, wobei die Primärsignaleinrichtung (101), insbesondere auf Anforderung, abgeschaltet wird, solange der berechnete Vertrauensparameter des ausgewählten Ersatzsignals oberhalb eines vorgegebenen Grenzwerts liegt.

11. Vorrichtung (100) zum Ermitteln einer Geschwindigkeit eines Fahrrads (1), insbesondere eines Zwei- oder Dreirads in Form eines Pedelecs, umfassend

   eine Primärsignaleinrichtung (101), die ausgebildet ist, ein pulsbasiertes Primärsignal zur Ermittlung der Geschwindigkeit des Fahrrads (1) bereitzustellen,
   zumindest eine Ersatzsignaleinrichtung (102), die ausgebildet ist, zumindest zwei Ersatzsignale für die Geschwindigkeit des Fahrrads (1) bereitzustellen, und
   eine Geschwindigkeitsermittlungseinrichtung (103), die ausgebildet ist, anhand des Primarsignals und der Ersatzsignale die Geschwindigkeit des Fahrrads (1) zu ermitteln und im Fall einer Störung des Primärsignals die folgenden Schritte durchzuführen:

- Berechnen (S3) eines Vertrauensparameters für die zumindest zwei Ersatzsignale, wobei der Vertrauensparameter die Güte des jeweiligen Ersatzsignals hinsichtlich einer Repräsentation der aktuellen Geschwindigkeit des Fahrrads (1) wiedergibt, und
- Ermitteln (S4) der Geschwindigkeit des Fahrrads (1) in einem Überbrückungsbetrieb basierend auf demjenigen Ersatzsignal mit dem höheren Vertrauensparameter.

12. Fahrrad, insbesondere ein Zwei- oder Dreirad, vorzugsweise in Form eines Pedelecs, mit einer Vorrichtung (100) gemäß Anspruch 11.

## Claims

1. Method for determining a speed of a bicycle (1), in particular of a two-wheeler or three-wheeler in the form of a pedelec, wherein the speed of the bicycle (1) is determined (S1) on the basis of a pulse-based primary signal provided by means of a primary signal device (101), wherein the primary signal is the signal from the primary signal device which is used primarily to determine the speed of the bicycle, and wherein, in the event of a disturbance in the primary signal, the following steps are carried out:

- providing (S2) at least two substitute signals for the speed of the bicycle (1),
- calculating (S3) a trust parameter for the at least two substitute signals, wherein the trust parameter represents the quality of the respective substitute signal with respect to a representation of the current speed of the bicycle (1),
- determining (S4) the speed of the bicycle (1) in a bypass mode on the basis of that substitute signal having the higher trust parameter.

2. Method according to Claim 1, wherein the substitute signal for determining the speed is selected on the basis of a previously stored ranking if the same trust parameter is determined in each case for at least two of the substitute signals having the highest trust parameter.

3. Method according to one of Claims 1-2, wherein a check is carried out regularly and/or on request in order to determine whether the disturbance in the primary signal has disappeared, and wherein the speed of the bicycle is determined again on the basis of the primary signal when it has been determined that the disturbance has disappeared.

4. Method according to Claim 3, wherein the disappearance of the disturbance in the primary signal is detected if the determined speeds on the basis of the primary signal and on the basis of the selected substitute signal are the same within a predefined tolerance, in particular for a predefinable distance covered by means of the bicycle (1) and/or for a predefinable time period.

5. Method according to one of Claims 1-4, wherein a disturbance in the primary signal is detected if at least one expected pulse is absent.

6. Method according to one of Claims 1-5, wherein the speed of the bicycle (1) is estimated upwards if the values of the at least two calculated trust parameters lie below a predefined limit value.

7. Method according to one of Claim 6, wherein the disappearance of the disturbance is no longer checked if the values of the at least two calculated trust parameters lie at least once below a predefined limit value.

8. Method according to one of Claims 1-7, wherein the primary signal is provided using a reed contact and/or a magnetic field sensor (102) and corresponding magnet (101) on a wheel (2, 7) of the bicycle (1), and/or wherein at least one substitute signal is provided by means of an inertial measuring unit (105), a rider cadence sensor, a rider torque sensor, a drive cadence sensor and/or a drive torque sensor of a drive of the bicycle.

9. Method according to Claim 8, wherein a gear ratio of a gearbox of the drive is additionally taken into account when determining the speed on the basis of the substitute signal.

10. Method according to one of Claims 1-9, wherein the primary signal device (101) is switched off, in particular on request, as long as the calculated trust parameter of the selected substitute signal lies above a predefined limit value.

11. Apparatus (100) for determining a speed of a bicycle (1), in particular of a two-wheeler or three-wheeler in the form of a pedelec, comprising

a primary signal device (101) which is designed to provide a pulse-based primary signal for determining the speed of the bicycle (1), at least one substitute signal device (102) which is designed to provide at least two substitute signals for the speed of the bicycle (1), and a speed determination device (103) which is designed to determine the speed of the bicycle (1) on the basis of the primary signal and the substitute signals and to carry out the following steps in the event of a disturbance in the primary signal:

- calculating (S3) a trust parameter for the at least two substitute signals, wherein the trust parameter represents the quality of the respective substitute signal with respect to a representation of the current speed of the bicycle (1), and
- determining (S4) the speed of the bicycle (1) in a bypass mode on the basis of that substitute signal having the higher trust parameter.

12. Bicycle, in particular a two-wheeler or three-wheeler, preferably in the form of a pedelec, having an apparatus (100) according to Claim 11.

**Revendications**

1. Procédé pour déterminer une vitesse d'un cycle (1), en particulier d'un cycle à deux ou trois roues sous la forme d'un vélo à assistance électrique, la vitesse du cycle (1) étant déterminée (S1) sur la base d'un signal primaire à impulsions, fourni au moyen d'un dispositif de signal primaire (101), le signal primaire étant le signal du dispositif de signal primaire qui est utilisé principalement pour la détermination de la vitesse du cycle et, en cas de défaillance du signal primaire, les étapes suivantes étant effectuées :

- fourniture (S2) d'au moins deux signaux de substitution pour la vitesse du cycle (1),
- calcul (S3) d'un paramètre de confiance pour lesdits au moins deux signaux de substitution, le paramètre de confiance reproduisant la qualité du signal de substitution respectif quant à une représentation de la vitesse actuelle du cycle (1),
- détermination (S4) de la vitesse du cycle (1) dans un mode de contournement sur la base du signal de substitution présentant le paramètre de confiance le plus élevé.

2. Procédé selon la revendication 1, dans lequel celui des signaux de substitution qui est destiné à la détermination de la vitesse est sélectionné sur la base d'un ordre de priorité mémorisé au préalable lorsque, pour au moins deux des signaux de substitution présentant le paramètre de confiance le plus élevé, le même paramètre de confiance est respectivement déterminé.

3. Procédé selon l'une des revendications 1 à 2, dans lequel il est vérifié régulièrement et/ou sur demande si la défaillance du signal primaire a disparu, et dans lequel, en cas de disparition constatée de la défaillance, la vitesse du cycle est à nouveau déterminée à l'aide du signal primaire.

4. Procédé selon la revendication 3, dans lequel la disparition de la défaillance du signal primaire est détectée lorsque les vitesses déterminées sur la base du signal primaire et sur la base du signal de substitution sélectionné sont identiques à une tolérance près qui est prédéfinie, en particulier pour une distance à parcourir prédéfinie au moyen du cycle (1) et/ou pour un laps de temps prédéfini.

5. Procédé selon l'une des revendications 1 à 4, dans lequel une défaillance du signal primaire est détectée si au moins une impulsion attendue est absente.

6. Procédé selon l'une des revendications 1 à 5, dans lequel la vitesse du cycle (1) est estimée à la hausse si les valeurs desdits au moins deux paramètres de confiance calculés se situent en dessous d'une valeur limite prédéfinie.

7. Procédé selon l'une de la revendication 6, dans lequel la disparition de la défaillance n'est plus vérifiée si les valeurs desdits au moins deux paramètres de confiance calculés se situent au moins une fois en dessous d'une valeur limite prédéfinie.

8. Procédé selon l'une des revendications 1 à 7, dans lequel le signal primaire est fourni à l'aide d'un contact Reed et/ou d'un capteur de champ magnétique (102) et d'un aimant (101) correspondant sur une roue (2, 7) du cycle (1), et/ou dans lequel au moins un signal de substitution est fourni au moyen d'une unité de mesure inertielle (105), d'un capteur de cadence du cycliste, d'un capteur de couple du cycliste, d'un capteur de cadence d'entraînement et/ou d'un capteur de couple d'entraînement d'un système d'entraînement du cycle.

9. Procédé selon la revendication 8, dans lequel un rapport de transmission d'une transmission du système d'entraînement est en outre pris en compte lors de la détermination de la vitesse à l'aide du signal de substitution.

10. Procédé selon l'une des revendications 1 à 9, dans lequel le dispositif de signal primaire (101) est désactivé, en particulier sur demande, tant que le paramètre de confiance calculé du signal de substitution sélectionné se situe au-dessus d'une valeur limite prédéfinie.

11. Dispositif (100) pour déterminer la vitesse d'un cycle (1), en particulier d'un cycle à deux ou trois roues sous la forme d'un vélo à assistance électrique, comprenant

un dispositif de signal primaire (101), conçu pour fournir un signal primaire à base d'impulsions pour la détermination de la vitesse du cycle (1), au moins un dispositif de signal de substitution (102), conçu pour fournir au moins deux signaux de substitution pour la vitesse du cycle (1), et un dispositif de détermination de vitesse (103), conçu pour déterminer la vitesse du cycle (1) à l'aide du signal primaire et des signaux de substitution et pour exécuter, en cas de défaillance du signal primaire, les étapes suivantes :

- calcul (S3) d'un paramètre de confiance pour lesdits au moins deux signaux de substitution, le paramètre de confiance reproduisant la qualité du signal de substitution respectif quant à une représentation de la vitesse actuelle du cycle (1), et
- détermination (S4) de la vitesse du cycle (1) dans un mode de contournement sur la base du signal de substitution présentant le paramètre de confiance le plus élevé.

12. Cycle, en particulier cycle à deux ou trois roues, de préférence sous forme d'un vélo à assistance électrique, comportant un dispositif (100) selon la revendication 11.

**Fig. 1**

**Fig. 2**

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005005048 A1
- US 2015220848 A1
- DE 102014212760 A1
- EP 3435094 A
- DE 102006040297 A1